# EUROPEAN PATENT SPECIFICATION

(11) **EP 0 431 902 B1**
(45) Date of publication and mention of the grant of the patent: **15.02.1995**
(21) Application number: 90313167.0
(22) Date of filing: 04.12.1990
(51) Int. Cl.: H04N 9/28

(54) **Digital convergence unit**
Digitale Konvergenzeinheit
Unité de convergence numérique

(30) Priority: 08.12.1989 JP 317443/89
(43) Date of publication of application: 12.06.1991
(73) Proprietor: MATSUSHITA ELECTRIC INDUSTRIAL CO., LTD., Kadoma-shi, Osaka-fu 571 (JP)
(72) Inventor: Tsujihara, Susumu, Neyagawa-shi (JP); Sakanishi, Yasuaki, Ibaraki-shi (JP)
(74) Representative: Smith, Norman Ian

(56) References cited:
- US-A- 4 870 329
- PATENT ABSTRACTS OF JAPAN, vol. 9, no. 291 (E-359)[2014], 19th November 1985;& JP-A-60 130 288 (MATSUSHITA DENKI SANGYO K.K.) 11-07-1985
- PATENT ABSTRACTS OF JAPAN, vol. 13, no. 195 (E-754)[3543], 10th May 1989;& JP-A-1 016 192 (MATSUSHITA ELECTRIC IND. CO. LTD) 19-01-1989

## Description

### FIELD OF THE INVENTION

The present invention relates to a digital convergence unit for adjusting convergence of a color television receiver by converting correction data in accordance with changes in horizontal and vertical frequencies, screen aspect and horizontal and vertical amplitudes even if they change after adjusting dynamic convergence.

### DESCRIPTION OF THE RELATED ART

In general, in a projection type color picture receiver for expandingly projecting color pictures on a screen by using three projection tubes that emit three primary colors, mis-convergence may occur on the screen due to different incident angles of the color rays emitted onto the screen from the respective projection tubes.

Registration of the three primary colors, or convergence thereof, is made by adjusting the waveform and magnitude of a convergence correction signal which is an analog signal synchronized with the horizontal and vertical scanning periods. This method, however, has a problem in its convergence precision. In order to solve this problem, there are various proposals of digital convergence units which can provide high convergence precision, such as a one that can treat various types of signal sources as disclosed in JP-A-60-130288, or a one that can treat various screen aspect ratios as disclosed in JP-A-62-11388.

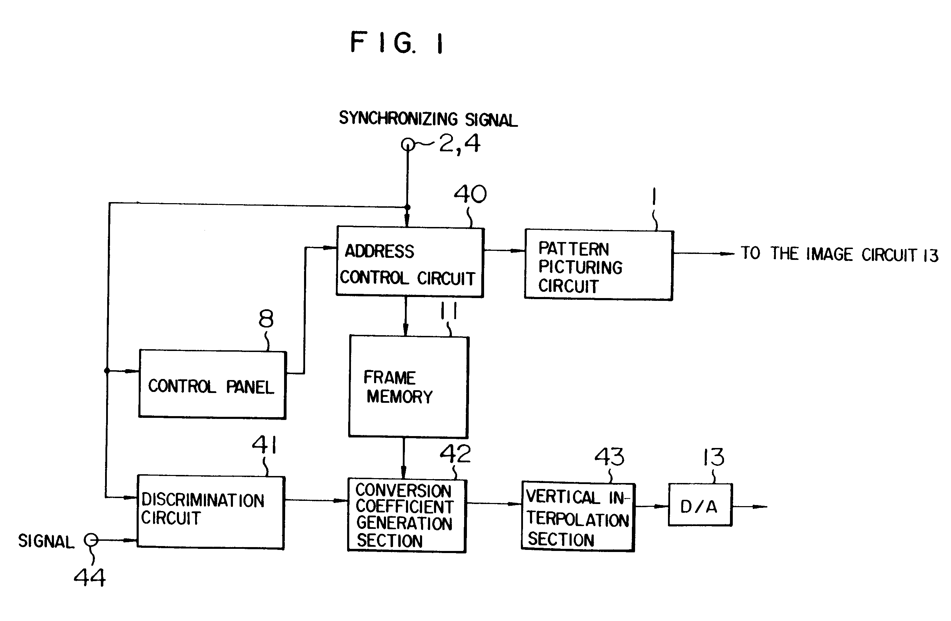

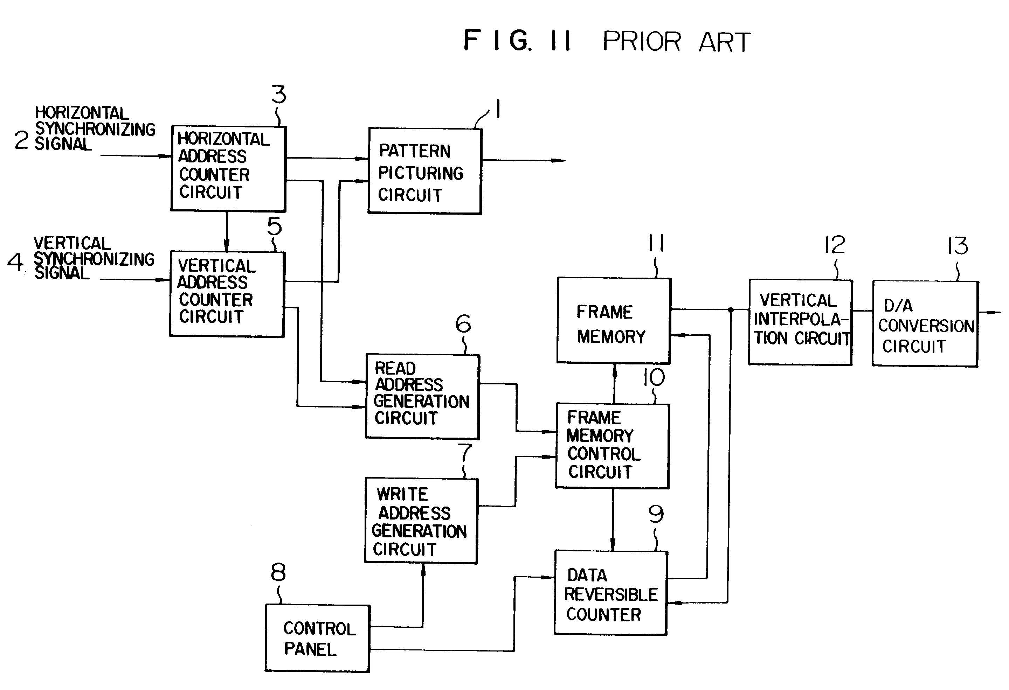

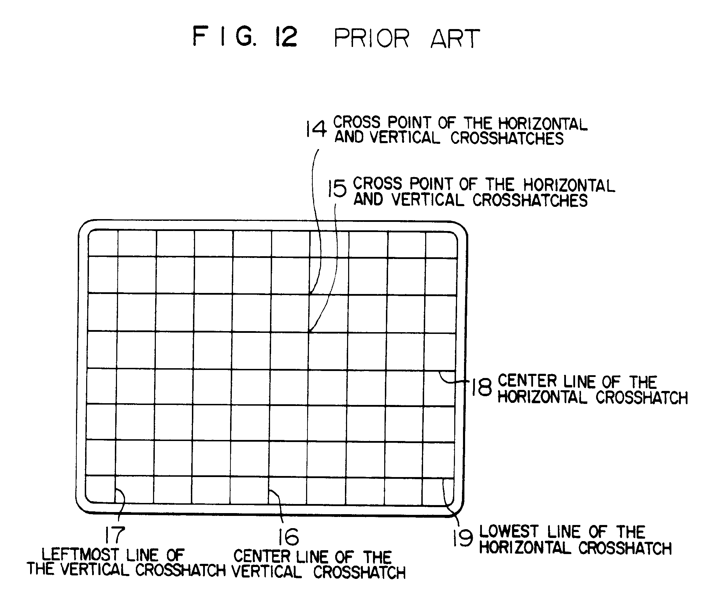

A conventional digital convergence unit will be explained below. Fig. 11 is a block diagram showing the conventional digital convergence unit. This unit produces on the screen a convergence correction pattern such as a cross-hatch pattern as shown in Fig. 12, digitally writes convergence correction quantity data for each adjusting point in a frame memory, reads this data out of the memory and converts it from digital to analog quantity, thereby to perform convergence correction. Referring to Fig. 11, 1 designates a pattern picturing circuit, 2 a horizontal synchronizing signal, 3 a horizontal address counter circuit, 4 a vertical synchronizing signal, 5 a vertical address counter circuit, 6 a read address generation circuit, 7 a write address generation circuit, 8 a control panel, 9 a data reversible counter, 10 a frame memory control circuit, 11 a frame memory, 12 a vertical interpolation circuit, and 13 a D/A conversion circuit.

Next, operation of the above conventional example will be explained. First, as shown in Fig. 12, a cross-hatch signal is sent from the pattern picturing circuit 1 to visualize on the screen a cross-hatch pattern including seven horizontal lines and nine vertical lines, for example. Of this pattern signal, a signal for the horizontal direction is produced by supplying the horizontal synchronizing signal 2 which is synchronous with the scanning of the screen to the horizontal address counter circuit 3 which comprises a PLL (Phase Lock Loop) circuit and a frequency dividing circuit. A vertical direction signal of the pattern signal is produced by the vertical address counter circuit 5 which is reset by the vertical synchronizing signal 4, and is supplied to the pattern picturing circuit 1 to visualize the vertical lines on the screen. Next, a cursor key (not shown) of the control panel 8 is used to select a cross point of the cross-hatch signal to be corrected (hereinafter referred to as an adjusting point) and a color e.g. red to be corrected. The address of an adjusting point selected by the cursor key is stored in the write address generation circuit 7 and is supplied to the frame memory 11 through the frame memory control circuit 10. The data to be corrected at the adjusting point designated by the cursor key is read from the frame memory 11 and is written in the data reversible counter 9. Further, a write key (not shown) of the control panel 8 is operated to either increase or decrease the data reversible counter 9 to correct the data by writing it in the frame memory 11.

Explanation will now be made of reading of the convergence correction data written in the frame memory 11. Horizontal and vertical addresses corresponding to each of the adjusting points on the screen are produced by the horizontal address counter circuit 3 and the vertical address counter circuit 5 to which the horizontal synchronizing signal 2 and the vertical synchronizing signal 4 that are in synchronism with the scanning period of the screen are inputted respectively. The horizontal and vertical addresses thus produced are supplied to the read address generation circuit 6, and then applied to the frame memory 11 through the frame memory control circuit 10, thereby to read the correction data at each adjusting point. The frame memory 11 stores only the correction data at the position corresponding to each adjusting point. Therefore, for the correction between adjusting points in the vertical direction, interpolation correction is performed by the vertical interpolation circuit 12. The vertical interpolation circuit 12 comprises a subtraction circuit, a coefficient ROM, a multiplication circuit, and an addition circuit, etc. The vertical interpolation circuit 12 performs an interpolation, for example, by using the subtraction circuit to obtain a difference between the two adjusting points, i.e. a point 14 of the second row and a point 15 of the third row based on the correction data, multiplying the difference by the multiplication circuit a weighting coefficient for each scanning line which is written in the coefficient ROM in advance, and adding the result to the correction data for the point 14 of the second row by the addition circuit. The output of the vertical interpolation circuit 12 which operates as described above is converted into an analog quantity by using the D/A conversion circuit 13, to obtain a stepped wave shape signal. A signal between the adjusting points in the horizontal direction is adjusted such that correction quantity at the adjusting point in each line is smoothed out by a low pass filter (not shown) and is supplied to the convergence yoke after being amplified.

As described above, according to the conventional method, each adjusting point can be corrected independently of each other, to ensure convergence correction in high precision.

When the horizontal and vertical frequencies, screen aspect and horizontal and vertical amplitudes change, adjustments are made in the same manner as described above.

Thus, according to the conventional method, each adjusting point can be corrected independently of each other, and corrections can also be performed for signal sources with different horizontal and vertical frequencies, screen aspect and horizontal and vertical amplitudes change, so that convergence correction can be performed in high precision.

However, when horizontal and vertical frequencies, screen aspect and horizontal and vertical amplitudes change, positional deviation in the digital convergence adjusting pattern on the screen, such as cross-hatches may occur, so that digital convergence correction data cannot be shared. As a result, convergence correction must be repeated each time for the number of images corresponding to the changed patterns, which requires that all the convergence correction data are held.

Although there is an alternative method for sharing data by changing the number of adjusting points by making the number to correspond to an aspect ratio, this method involves a complex processing in the address system such as for memory writing because the adjusting point changes. Therefore, there is a problem that the size of the circuit needs to be very large.

Similar prior art arrangement are described in JP-A-1016192 and JP-A-60130288.

### SUMMARY OF THE INVENTION

It is an object of the present invention to provide a digital convergence unit which converts a single digital convergence correction data in accordance with an aspect ratio to perform convergence correction, thereby to solve the above-described problems in the conventional art.

According to the present invention there is provided a digital convergence unit for use with a display means for displaying images with three primary color components on a screen, said unit comprising memory means for storing correction data representative of a reference convergence correction for each of a plurality of adjusting points defined on the screen, means for producing image information from an input signal, conversion means for generating converted correction data from said image information and correction data read out from said memory means, and correction signal generating means for generating on the basis of said converted correction data an adjustment signal which is used for position adjustment of said primary color components over the entire screen, characterised in that said means for producing is arranged to provide data indicative of aspect ratio information from said input signal, said unit includes conversion coefficient generation means for generating a conversion coefficient based on said data indicative of said aspect ratio information, and said conversion means is arranged to generate the converted correction data from said conversion coefficient and the correction data read out from said memory means.

In one embodiment of the invention the digital convergence unit further comprises detection means for detecting positional deviations of the pattern with respect to reference positions by positional detectors provided on the screen, pattern generation means for generating a pattern signal at positions on the screen where the pattern signal can be detected by the detection means, position detection means for detecting the magnitude by the positional deviations with respect to the reference positions based on position signals outputted from the detectors, and means for outputting the conversion coefficient in accordance with the aspect ratio from the position detection means.

In embodiments in accordance with the present invention, when the aspect ratio has changed, the convergence correction data is controlled so that various signals can so be dealt with by a single operation of convergence correction for one image, and convergence correction data for only one image is required to be held so that memory capacity and a circuit size can be reduced and adjusting time can also be reduced accordingly.

Further, when the aspect ratio has changed, by detecting the magnitude of positional deviation of the digital convergence correction pattern and raster size with respect to the reference positions in high precision by the position detectors provided on the screen, converting the digital convergence correction data so as to make the convergence correction data to correspond to said various signals in accordance with the magnitude of the positional deviation, and thereby performing convergence correction, it is possible to automatically treat the various signals.

The invention will be described now by way of example only, with particular reference to the accompanying drawings. In the drawings:
Fig. 1 is a block daigram of a digital convergence unit in an embodiment of the present invention;
Figs. 2(a) to 2(c) are schematic diagrams showing a screen and correction waveforms, respectively, for explaining the operation of the above embodiment;
Fig. 3 is a block diagram for explaining the operation of the above embodiment;
Fig. 4 is a block diagram of a discrimination circuit in the above embodiment;
Figs. 5(a) to 5(c) are schematic diagrams showing a screen and correction waveforms respectively, for explaining the operation of the above embodiment;
Fig. 6 is a schematic diagram showing a screen for explaining data conversion means in the above embodiment;
Fig. 7 is a block diagram of the data conversion means in the above embodiment;
Fig. 8 is a block diagram of a digital convergence unit in a second embodiment of the present invention;
Fig. 9A is a schematic diagram showing a screen for explaining the operation of the above embodiment;
Figs. 9B(a) to 9B(d) show various detection methods, respectively, in a position detector;
Figs. 10A and 10B are configuration diagrams of position detectors respectively of a direct type and a projection type in the above embodiment;
Fig. 11 is a block diagram of the conventional digital convergence unit; and
Fig. 12 is a schematic diagram showing a screen for explaining the conventional example.

### DESCRIPTION OF THE PREFERRED EMBODIMENTS

An embodiment of the present invention will be explained below with reference to the drawings. Figs. 1, 3, 4 and 7 are block diagrams of the digital convergence unit in the first embodiment of the present invention. Referring to Fig. 1, 40 designates an address control section for generating various address signals, 41 a discrimination circuit for discriminating horizontal and vertical frequencies, screen aspect and horizontal and vertical amplitudes (hereinafter simply referred to as a discrimination circuit) from an input synchronizing signal and various correction data, 42 a conversion coefficient generation section for generating a conversion coefficient to carry out a vertical correction with an output signal from said discrimination circuit, and 43 a vertical correction section for carrying out an interpolation in a vertical direction by using said conversion coefficient. In the above diagrams, those portions which operate in the similar manner as those in the conventional unit as shown in Fig. 11 are referenced by using the same numerals and their explanation is omitted.

Operation of the digital convergence unit in the first embodiment having the above configuration will be explained next. An input terminal 44 of the discrimination circuit 41 is applied with signals including a synchronizing signal and picture information, to discriminate aspect information. The discrimination signal including aspect information from said discrimination circuit is supplied to the conversion coefficient generation section 42 to generate a conversion coefficient for a vertical correction corresponding to the aspect. The conversion coefficient from the conversion coefficient generation section 42 is supplied to the vertical interpolation section 43 to interpolate between adjusting points to generate a correction data.

As described above, correction data corresponding to various aspect ratios can be automatically generated by controlling a conversion coefficient for a vertical interpolation.

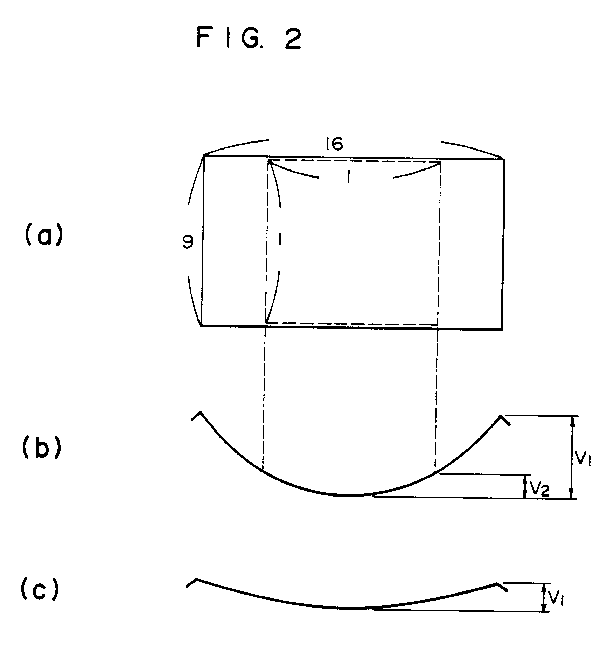

Next, detailed description will be made of the reason for converting a correction data when an aspect ratio has been changed, with reference to correction waveform diagrams in Fig. 2(b) and 2(c). When each correction waveform has a horizontal parabolic waveform having an amplitude V₁ as shown in Fig. 2(b) when the aspect ratio is 16: 9 as shown by a solid line in Fig. 2(a), mis-convergence in the periphery portion of the screen may occur because of a large spatial correction quantity on the screen, if the horizontal amplitude is lowered to change the aspect ratio from 16: 9 to 1: 1. Therefore, it becomes necessary to generate a correction waveform in accordance with a horizontal amplitude as shown by a correction waveform having an amplitude V₂ shown in Fig. 2(c).

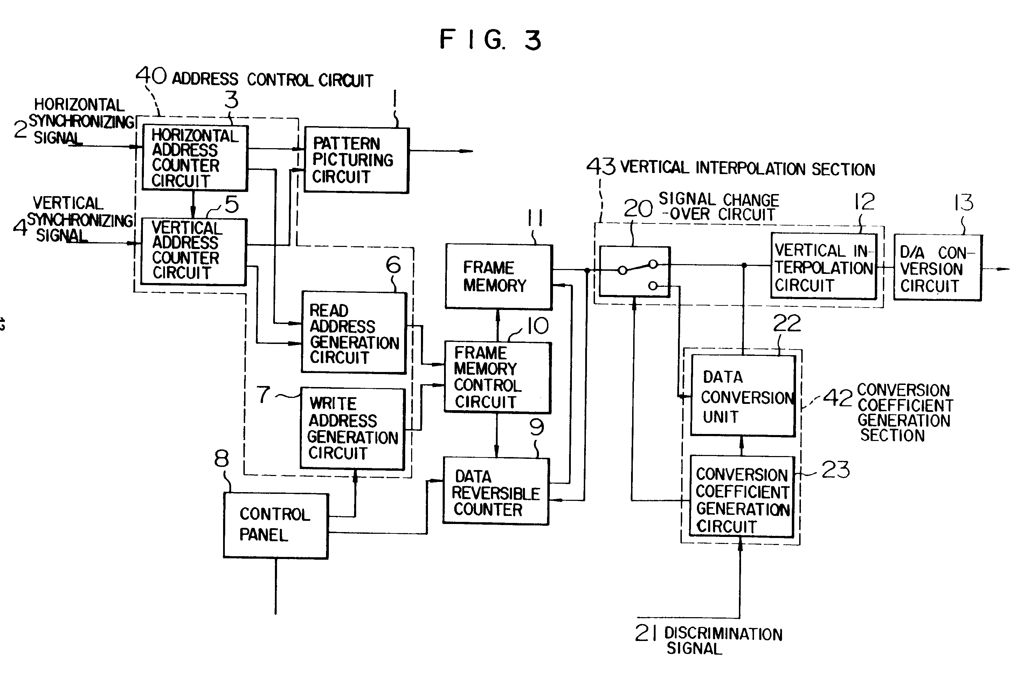

Next, the operation of the first embodiment will be explained in further detail with reference to the block diagram shown in Fig. 3. Referring to Fig. 3, the address control circuit 40 comprises a horizontal counter circuit 3, a vertical counter circuit 5, a read address generation circuit 6 and a write address generation circuit 7. The conversion coefficient generation section 42 comprises a conversion coefficient generation circuit 23 and a data conversion unit 22, and the vertical interpolation section 43 comprises a signal switching circuit 20 and a vertical interpolation circuit 12.

In a case where a discrimination signal 21 including a fundamental aspect ratio information from the discrimination circuit 41 shown in Fig. 1 is inputted to the signal change-over circuit 20, the circuit 20 takes a state shown in Fig. 3 (the state where the upper side contact point is selected). In this case, the convergence unit of this embodiment works in the same fashon as the conventional digital convergence unit (Fig. 11) does, and convergence adjustment of the whole screen is carried out by a digital convergence circuit. Next, a signal of different ratio is inputted, the change in the aspect ratio is discriminated by the discrimination circuit 41 of Fig. 1 and a discrimination signal 21 is outputted. When the signal 21 is inputted to a conversion coefficient generation circuit 23, the circuit 23 generates a conversion coefficient according to said discrimination signal and a signal for switching the signal change-over circuit 20. The conversion coefficient generation circuit 23 comprises a coefficient ROM and a signal discrimination circuit, and has the following operation. When a discrimination signal 21 is applied, the input signal is discriminated by the signal discrimination circuit, and a digital convergence correction data conversion coefficient stored in ROM in advance in accordance with said input signal is selected and outputted. At the same time, a signal for changing over the signal change-over switch 20 is outputted from the signal discrimination circuit. By the output of the conversion coefficient generation circuit 23 having the above operation, the signal change-over circuit 20 is changed over to the lower side, a digital convergence correction data outputted from the frame memory 11 is applied to the data conversion unit 22, and the data conversion coefficient outputted from said conversion coefficient generation circuit 23 is applied to the data conversion unit 22. In the circuit 22, said correction data is multiplied by said conversion coefficient by a multiplication circuit, and the result is converted to a digital convergence correction data in accordance with horizontal and vertical frequencies, screen aspect and horizontal and vertical amplitudes. The corrected data is outputted to the vertical interpolation circuit 12 and is interpolated by this circuit 12, is converted to an analog signal by the D/A conversion circuit 13, and then the convergence is corrected.

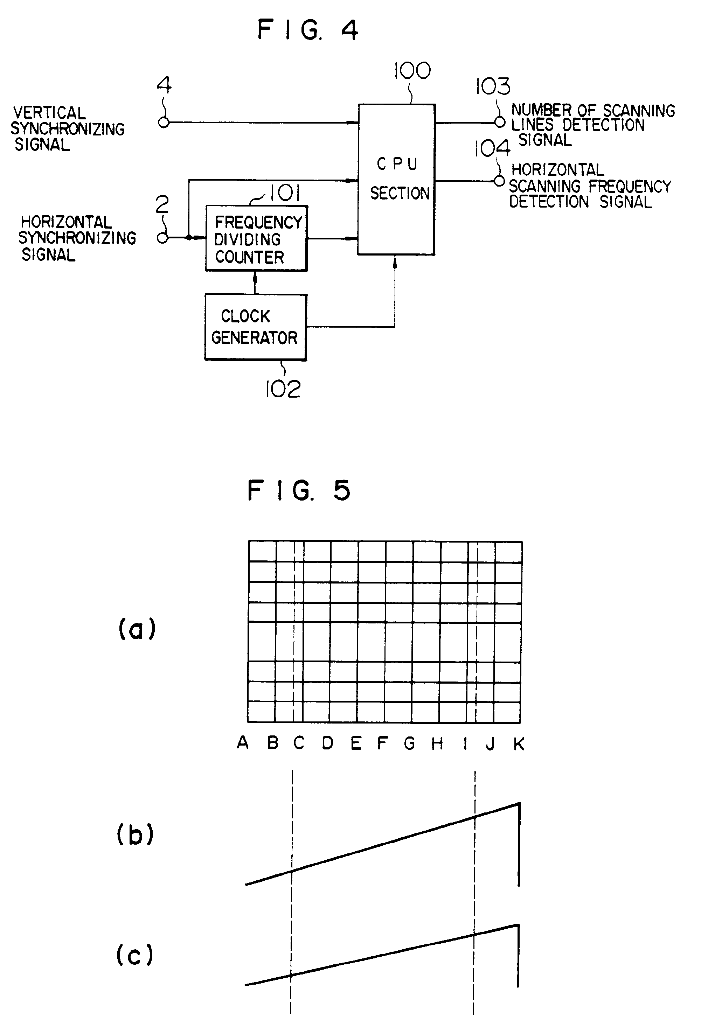

The discrimination circuit 41 will be explained in detail with reference to the block diagram in Fig. 4. A vertical synchronizing signal is supplied to the input terminal 4 and a horizontal synchronizing signal is supplied to the input terminal 2. The horizontal synchronizing signal from the input terminal 2 is supplied to a frequency dividing counter 101, and a frequency dividing ratio with a clock signal from a CPU clock generator 102 is obtained by a CPU section 100 so that a horizontal scanning frequency detection signal is obtained at an output terminal 104. A vertical synchronizing signal from the input terminal 4 is directly supplied to the CPU section 100, and a number of occurrence of a horizontal synchronizing signal in the vertical synchronizing signal from the input terminal 2, that is, a number of scanning lines in one field, is obtained by the CPU section, so that a scanning line number detection signal is obtained from an output terminal 103. The above two types of signals are discriminated by a detection signal to provide a discrimination signal to obtain an aspect ratio.

A conversion operation of a correction data will be explained with reference to a schematic diagram of a screen and waveform diagrams in Figs. 5(a) to 5(c). In the case of an aspect ratio shown by a solid line in Fig. 5(a), an output from the digital convergence becomes a corrected waveform shown in Fig. 5(b) with a conversion coefficient k = 1, for example. In the case of an aspect ratio corresponding to a reduced horizontal amplitude shown by a dotted line in Fig. 5(a), K is set to be 0.5 so that said conversion coefficient becomes smaller. As a result, a corrected waveform with a reduced amplitude is outputted as shown in Fig. 5(c).

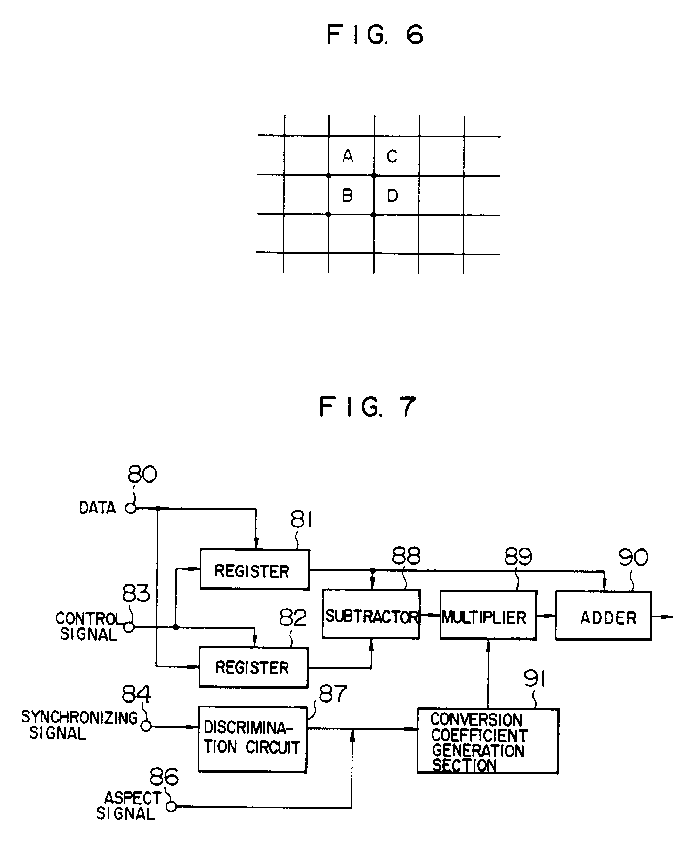

Conversion of a correction data in the vertical interpolation section 43 will be explained in detail with reference to the diagram showing a screen in Fig. 6 and the block diagram in Fig. 7. Referring to Fig. 6, correction quantities of scanning lines between points A and B and between points C and D can be obtained from expressions (A-B) k + A and (C-D) k + C respectively, where k is a value obtained by linear approximation and is supplied from the conversion coefficient generation section. Accordingly, it is clear that k is obtained from the number of scanning lines N between the points A and B. The number of scanning lines N can also be obtained from the number of cross-hatch signals in the vertical direction and the number of scanning lines M in one field.

Correction data at points A and B read from the frame memory 11 are registered in registers 81 and 82. Outputs from the registers 81 and 82 are supplied to a subtractor 88. An output from the subtractor 88 and a coefficient k for each scanning line from a conversion coefficient generation section 91 are supplied to a multiplier 89, where they are multiplied and (A-B) k is obtained. From an adder 90, (A-B) k + A is outputted. A synchronizing signal is supplied to an input terminal 84, and a scanning frequency and a number of scanning lines are detected by a discrimination circuit 87 comprising a CPU and the like, so that a detection signal of an aspect ratio is produced. A discrimination signal from the discrimination circuit 87 or an aspect ratio signal from an input terminal 86 is supplied to the conversion coefficient generation section 91 so that a coefficient corresponding to the aspect ratio is generated.

It is understood that a correction data can be converted by controlling a coefficient in accordance with aspect ratio information as described above.

As described above, according to the present embodiment, since the change in the aspect ratio of the screen is discriminated, and the convergence correction data is controlled by the discrimination signal, it is sufficient for treating various signal source to hold a convergence correction data for one image, and this realizes a smaller memory and circuitry, as well as a shortened adjustment time.

Therefore, when only one correction data of an aspect ratio which becomes a reference is written in the frame memory, a change of an aspect ratio can also be corrected automatically.

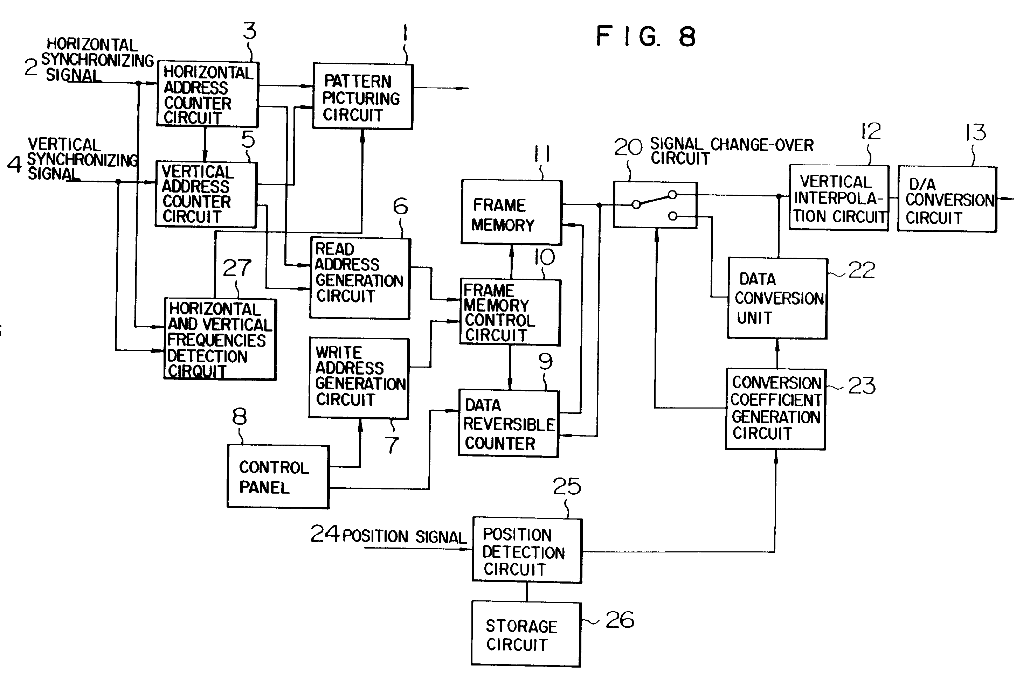

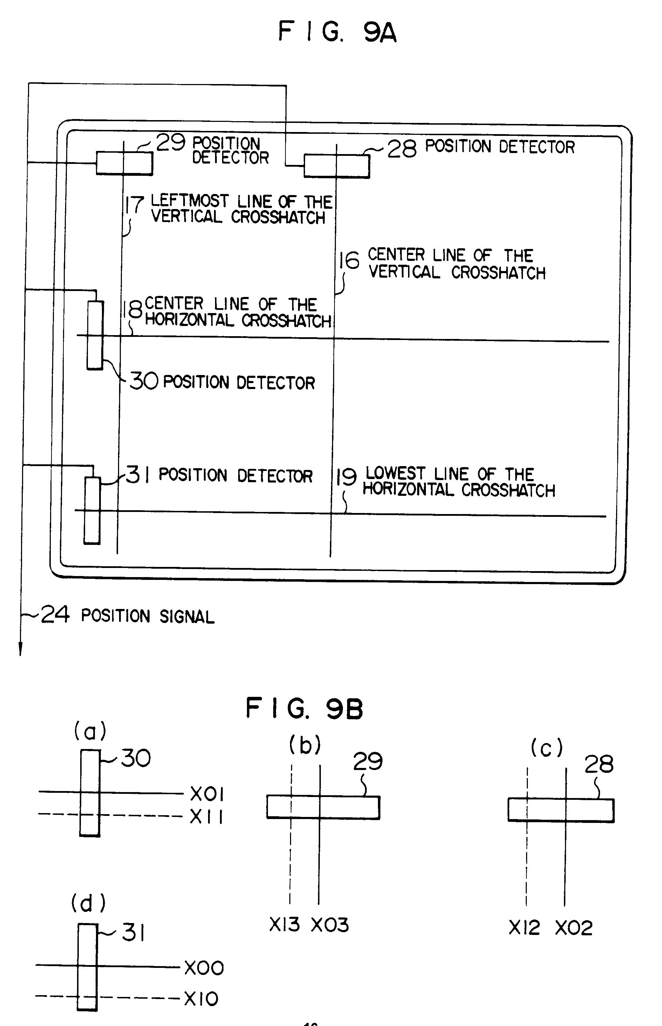

Figs. 8, 9A and 9B show a block diagram and a cross-hatch position detection operation diagram respectively of a digital convergence unit in the second embodiment of the present invention. The second embodiment is different from the first embodiment in that an aspect ratio is automatically detected in the second embodiment. Referring to Fig. 9A, 16 designates a center line of a vertical cross-hatch, 17 a leftmost line of the vertical cross-hatch, 18 a center line of a horizontal cross-hatch, 19 a lowest line of the horizontal cross-hatch, 28, 29, 30 and 31 position detectors of each of said cross-hatch, and 24 a position signal from said position detector. Referring to Fig. 8, 25 designates a position detection circuit for inputting a position signal 24, 26 a storage circuit for storing a position detected by the position detection circuit 25, and 27 a horizontal and vertical frequency detection circuit. In Fig. 8, those portions performing the same operations as those in the first embodiment are referenced by the same numerals for which description is omitted here.

Operation of the digital convergence unit in the second embodiment having the above configuration will be explained below. The horizontal synchronizing signal 2 and the vertical synchronizing signal 4, respectively of a fundamental aspect ratio, are applied to the horizontal and vertical frequency detection circuit 27. The input is discriminated by said horizontal and vertical frequency detection circuit 27 and said discrimination signal is outputted to the pattern picturing circuit 1. A convergence adjusting pattern for dividing the screen horizontally and vertically at equal intervals in accordance with said signal is outputted from the pattern picturing circuit 1. On the screen, the pattern is produced as shown in Fig. 12. The above pattern is the same as that of the conventional method. The digital convergence unit of the present embodiment will be explained in detail with reference to Fig. 9A. Fig. 9A shows the details of Fig. 12. In Fig. 9A, pattern signals 16, 17, 18 and 19 outputted from the pattern picturing circuit 1 are produced as images on the position detectors 28, 29, 30 and 31. The center line 16 of the vertical cross-hatch, the leftmost line 17 of the vertical cross-hatch, the center line 18 of the horizontal cross-hatch and the lowest line 19 of the horizontal cross-hatch are produced as position signals 24 from the position detectors 28, 29, 30 and 31 respectively. These outputs from the detectors are detected at each position as a position data of the fundamental aspect ratio X00 to X03 (Fig. 9B) by the position detection circuit 25, and are stored in the storage circuit 26 respectively. A discrimination signal of the fundamental aspect ratio is produced by the position detection circuit 25 and is applied to the conversion coefficient generation circuit 23 to form a circuit, which is the same as the conventional digital convergence circuit (Fig. 11) and the circuit in the first embodiment. As a result, convergence adjustment of the screen as a whole is performed by the digital convergence circuit or by the analog convergence circuit in the same manner as the conventional method.

When a signal of different aspect ratio is inputted, the position of the pattern signal on the screen is deviated from the position. Similarly, positional deviations are detected as deviated positions X10 to X13 (Fig. 9B) by the position detection circuit 25. The position detection circuit 25 compares the positional deviation with the data of the fundamental aspect ratio stored in the storage circuit 26, to detect the magnitude of the positional deviation and discriminate the signal. The discriminated signal is outputted to the conversion coefficient circuit 23 and is converted using the digital convergence correction data to perform convergence adjustment.

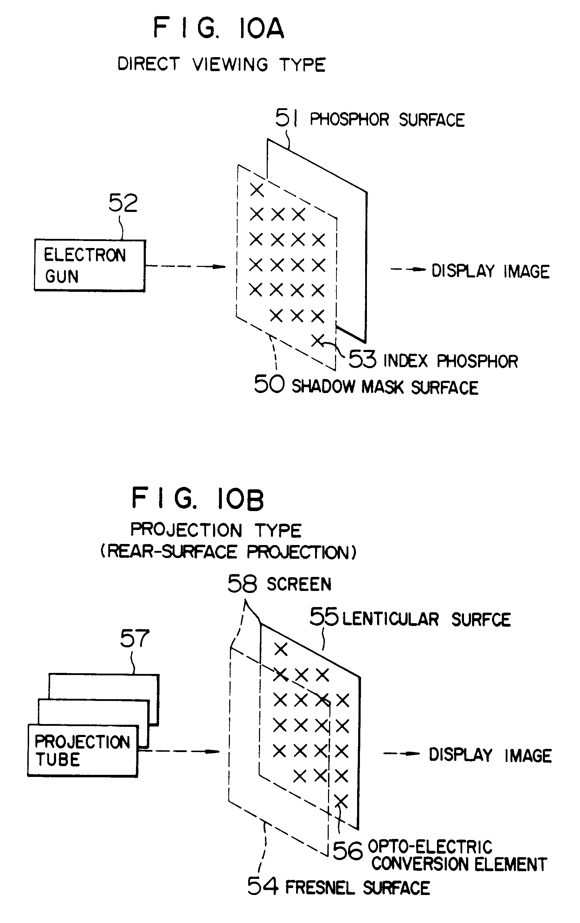

Next, methods of installing the position detectors on the screen will be explained in detail with reference to the configuration diagrams in Figs. 10A and 10B. Figs. 10A and 10B are diagrams showing arrangements of the position detectors based on a direct viewing type and a rear-surface projection type methods respectively. In the case of the direct viewing type in Fig. 10A, electron beams of three primary colors emitted from an electron gun 52 are deflected and then focussed on the surface of a shadow mask 50. The shadow mask 50 and a phosphor surface 51 are arranged in almost in parallel with each other. Phosphor dots of three colors R, G and B are arranged in each one of holes on the shadow mask and are coated on the phosphor screen. Electron beams which pass through each hole of the shadow mask are restricted there to stimulate the phosphor dots of the three colors R, G and B so that a display picture is obtained. The position detectors have a structure that a plurality of index phosphors 53 are coated on the shadow mask surface 50 which are not influenced by a display image, thereby to detect position. However, the index phosphors 53 may be coated at position which are not influenced by electron beams.

In the case of the rear-surface projection type shown in Fig. 10B, a beam of each color from a projection tube 57 of three principal colors is expandably projected on to a screen 58 which is structured by a Fresnel surface 54 and a lenticular surface 55 so that a display picture is obtained. The position detectors have such a structure that a plurality of opto-electric conversion elements 56 are disposed on a black matrix surface of the lenticular surface 55 which is not influenced by a display image, thereby to detect positions. The number of position detectors shown in the diagram corresponds to the positions of digital convergence adjusting points. The magnitude of the positional deviations are detected to automatically carry out convergence correction. Then, raster sizes and test signals are produced in images which are used as detection elements for detecting an aspect ratio. A conversion coefficient corresponding to each aspect is obtained to automatically generate a correction data as described above.

According to the present embodiment, an aspect ratio (a horizontal to vertical amplitude ratio) on the screen is directly detected as described above, so that a high-precision convergence correction can be automatically carried out corresponding to each aspect ratio. Further, scanning frequencies are detected and they are processed to match the detection signal so that the method can also be applied to a signal source of different scanning frequency.

In the above two embodiments, description has been made of a display unit using a CRT to facilitate understanding. However, it is needless to mention that the present invention can also be applied to other display units as well.

In the above first embodiment, as a means for detecting an aspect ratio a case of discriminating it from an input synchronizing signal has been described. However, discriminating of an aspect ratio can also be carried out by supplying an aspect control signal from the outside or by supplying the signal by multiplexing it with each signal.

In the second embodiment, description has been made of the positions for installing position detection elements to detect an aspect ratio such that a shadow mark surface, and a lenticular black matrix surface are the position for the cases of the direct viewing type and to the rear-surface projection type respectively. However, the position detection elements can also be installed at other positions as long as they are not influenced by an image signal.

## Claims

1. A digital convergence unit for use with a display means for displaying images with three primary color components on a screen, said unit comprising memory means (11) for storing correction data representative of a reference convergence correction for each of a plurality of adjusting points defined on the screen, means (41; 25) for producing image information from an input signal, conversion means (22) for generating converted correction data from said image information and correction data read out from said memory means (11), and correction signal generating means (12, 13) for generating on the basis of said converted correction data an adjustment signal which is used for position adjustment of said primary color components over the entire screen, characterised in that said means for producing (41; 25) is arranged to provide data indicative of aspect ratio information from said input signal, said unit includes conversion coefficient generation means (23) for generating a conversion coefficient based on said data indicative of said aspect ratio information, and said conversion means (22) is arranged to generate the converted correction data from said conversion coefficient and the correction data read out from said memory means (11).

2. A digital convergence unit according to claim 1, wherein said memory means is a frame memory means and said correction signal generation means (12, 13) includes means for interpolating said converted correction data between adjusting points over the entire screen.

3. A digital convergence unit according to claims 1 or 2, wherein said means for producing (41; 25) produces said data indicative of aspect ratio information from an input synchronising signal.

4. A digital convergence unit according to any preceding claim, wherein said aspect ratio information includes horizontal and vertical frequencies, a screen aspect ratio, and horizontal and vertical amplitudes.

5. A digital convergence unit according to any preceding claim, wherein said correction signal generation means (12, 13) is additionally responsive to correction data read out from said memory means (11), and further comprises signal changeover means (20) for selectively providing either correction data read from said frame memory means or converted correction data.

6. A digital convergence unit according to any preceding claim, wherein said means (41; 25) includes pattern generating means (1) for generating a pattern signal defined at each of said adjusting points, and position detecting means (25) having a plurality of position detectors to detect said pattern signal displayed on the screen for determining position deviations of the displayed pattern with respect to reference positions on said screen, wherein said position detectors are disposed, said positional deviations being representative of a screen aspect ratio and wherein said conversion coefficient generation means (42) generates the conversion coefficient based on said positional deviations.

## Patentansprüche

1. Digitale Wandlereinheit zur Verwendung mit einer Anzeigeeinrichtung zum Anzeigen vom Bildern mit drei Primärfarbenkomponenten auf einem Bildschirm, wobei die Einheit eine Speichereinrichtung (11) zum Speichern von Korrekturdaten, die für eine Referenzwandlerkorrektur für jeden einer Mehrzahl auf dem Bildschirm definierter justierpunkte stehen, eine Einrichtung (41; 25) zum Erzeugen von Bildinformationen aus einem Eingangssignal, eine Wandlungseinrichtung (22) zum Erzeugen von gewandelten Korrekturdaten aus den Bildinformationen und den aus der Speichereinrichtung (11) ausgelesenen Korrekturdaten sowie eine Korrektursignalerzeugungseinrichtung (12, 13) zum auf den gewandelten Korrekturdaten basierenden Erzeugen eines Justiersignals aufweist, das für die Positionsjustierung der Primärfarbenkomponenten auf dem gesamten Bildschirm verwendet wird, *dadurch gekennzeichnet, daß* die Erzeugungseinrichtung (41; 25) dazu ausgelegt ist, Daten zu liefern, die Bildseitenverhältnisinformationen darstellen, und zwar aus dem Eingangssignal, wobei die Einheit eine Wandlungskoeffizientenerzeugungseinrichtung (23) zum Erzeugen eines Wandlungskoeffizienten auf der Grundlage der die Bildseitenverhältnisinformationen darstellenden Daten beinhaltet und die Wandlungseinrichtung (22) dazu ausgelegt ist, die gewandelten Korrekturdaten aus dem Wandlungskoeffizienten und den von der Speichereinrichtung (11) gelesenen Korrekturdaten zu erzeugen.

2. Digitale Wandlereinheit nach Anspruch 1, bei der die Speichereinrichtung eine Bildspeichereinrichtung ist und die Korrektursignalerzeugungseinrichtung (12, 13) eine Einrichtung zum Interpolieren der gewandelten Korrekturdaten zwischen Justierpunkten auf dem gesamten Bildschirm beinhaltet.

3. Digitale Wandlereinheit nach Anspruch 1 oder 2, bei der die Erzeugungseinrichtung (41; 25) die die Bildseitenverhältnisinformationen darstellenden Daten aus einem Eingangssynchronisiersignal erzeugt.

4. Digitale Wandlereinheit nach einem der vorangehenden Ansprüche, bei der die Seitenverhältnisinformationen eine Horizontal- und eine Vertikalfrequenz, ein Bildschirmseitenverhältnis sowie eine Horizontal- und eine Vertikalamplitude beinhalten.

5. Digitale Wandlereinheit nach einem der vorangehenden Ansprüche, bei der die Korrektursignalerzeugungseinrichtung (12, 13) zusätzlich auf von der Speichereinrichtung (11) gelesene Korrekturdaten anspricht und ferner eine Signalumschalteinrichtung (20) zum selektiven Zurverfügungstellen entweder der von der Bildspeichereinrichtung gelesenen Korrekturdaten oder gewandelter Korrekturdaten aufweist.

6. Digitale Wandlereinheit nach einem der vorangehenden Ansprüche, bei der die Einrichtung (41; 25) eine Mustererzeugungseinrichtung (1) zum Erzeugen eines bei jedem der Justierpunkte definierten Mustersignals sowie eine Positionserfassungseinrichtung (25) mit mehreren Positionsdetektoren zum Erfassen des auf dem Bildschirm dargestellten Mustersignals beinhaltet, um Positionsabweichungen des dargestellten Musters bezüglich Referenzpositionen auf dem Bildschirm, wo die Positionsdetektoren angeordnet sind, zu bestimmen, wobei die Positionsabweichungen ein Bildschirmseitenverhältnis darstellen und wobei die Wandlungskoeffizientenerzeugungseinrichtung (42) den Wandlungskoeffizienten auf der Grundlage der Positionsabweichungen bestimmt.

## Revendications

1. Unité de convergence numérique, destinée à être utilisée avec des moyens d'affichage pour la présentation d'images à trois composantes de couleur primaires sur un écran, ladite unité comprenant des moyens de mémoire (11) pour mémoriser des données de correction représentatives d'une correction de convergence de référence pour chacun d'une multiplicité de points de réglage définis sur l'écran, des moyens (41; 25) pour produire des informations d'image à partir d'un signal d'entrée, des moyens de conversion (22) pour fournir des données de correction converties à partir desdites informations d'image et de données de correction extraites desdits moyens de mémoire (11), et des moyens d'élaboration de signal de correction (12, 13) pour élaborer, sur la base desdites données de correction converties, un signal de réglage qui est utilisé pour le réglage de position desdites composantes de couleurs primaires sur l'écran entier, caractérisée en ce que lesdits moyens de production d'informations d'image (41; 25) sont agencés de façon à produire, à partir dudit signal d'entrée, des données fournissant des informations sur le format de l'image, en ce que ladite unité comprend des moyens générateurs de coefficient de conversion (23) pour générer un coefficient de conversion sur la base desdites données fournissant lesdites informations sur le format de l'image, et en ce que lesdits moyens de conversion (22) sont agencés de façon à fournir les données de conversion converties à partir dudit coefficient de conversion et des données de correction extraites desdits moyens de mémoire (11).

2. Unité de convergence numérique selon la revendication 1, dans laquelle lesdits moyens de mémoire sont des moyens de mémorisation d'image complète, et en ce que lesdits moyens d'élaboration de signal de correction (12, 13) comprennent des moyens pour interpoler lesdites données de correction converties entre des points de réglage sur l'écran entier.

3. Unité de convergence numérique selon la revendication 1 ou 2, dans laquelle lesdits moyens de production d'informations d'image (41; 25) produisent lesdites données fournissant des informations sur le format de l'image à partir d'un signal de synchronisation d'entrée.

4. Unité de convergence numérique selon l'une quelconque des revendications 1 à 3, dans laquelle lesdites informations sur le format de l'image comprennent des fréquences lignes et des fréquences trames, un format de l'image de l'écran et des amplitudes de lignes et de trames.

5. Unité de convergence numérique selon l'une quelconque des revendications 1 à 4, dans laquelle lesdits moyens d'élaboration de signal de correction (12, 13) réagissent en plus à des données de correction extraites desdits moyens de mémoire (11) et comprennent en outre des moyens de permutation de signaux (20) pour fournir sélectivement, soit des données de correction extraites desdits moyens de mémorisation d'image complète, soit des données de correction converties.

6. Unité de convergence numérique selon l'une quelconque des revendications 1 à 5, dans laquelle lesdits moyens (41; 25) comprennent des moyens d'élaboration de mire (1) pour élaborer un signal de mire défini en chacun desdits points de réglage, et des moyens détecteurs de position (25) comportant une multiplicité de détecteurs de position pour détecter ledit signal de mire affiché sur l'écran, afin de déterminer des déviations de position de la mire affichée par rapport à des positions de référence sur ledit écran, où lesdits détecteurs de position sont disposés, lesdites déviations de position étant représentatives d'un format de l'image de l'écran, et dans laquelle lesdits moyens générateurs de coefficient de conversion (42) génèrent le coefficient de conversion sur la base desdites déviations de position.
